# EUROPEAN PATENT SPECIFICATION

(11) **EP 1 750 342 B1**
(45) Date of publication and mention of the grant of the patent: **13.08.2008**
(21) Application number: 05425579.9
(22) Date of filing: 04.08.2005
(51) Int. Cl.: H02G 5/04

(54) **Prefabricated leaktight duct member for the distribution of electrical power**
Vorgefertigtes und wasserdichtes Kanalelement für eine elektrische Energieverteilung und Verfahren zur dessen Herstellung
Elément préfabriqué et étanche de goulotte pour la distribution de puissance électrique et sa méthode de fabrication

(43) Date of publication of application: 07.02.2007
(73) Proprietor: BTICINO S.P.A., 20154 Milano (IT)
(72) Inventor: Fabrizi, Fabrizio, 24100 Bergamo (IT)
(74) Representative: Simino, Massimo

(56) References cited:
- EP-A- 0 652 609
- US-A- 3 771 103
- US-A- 6 039 584
- PATENT ABSTRACTS OF JAPAN vol. 002, no. 004 (E-003), 12 January 1978 (1978-01-12) -& JP 52 118297 A (MATSUSHITA ELECTRIC WORKS LTD), 4 October 1977 (1977-10-04)

## Description

This invention relates to a leaktight prefabricated duct member for the distribution of electrical power and a corresponding method of manufacture.

It is known that prefabricated duct members, currently referred to as sheathed bars or bus ducts, for the distribution of electrical power in buildings, in particular for industrial use or for offices, stores, shopping centres and the like, comprise members of standard lengths, for example 1, 2, 3 metres, which can be connected at their ends to obtain the longitudinal length required for each specific application. Electrical connections to power user equipment can be made at any point along their length.

These prefabricated components must satisfy many requirements: in addition to the ability to carry high currents, of the order of tens of amperes (typically 25 to 40 A), they must ensure maximum safety when work is carried out subsequent to their installation and in many types of installations, such as for example underfloor installations known as "embedded" installations, or in false ceilings and wherever there is a risk of possible seepage of water, they must be impervious to liquids, that is they must be leaktight.

Although the requirement for safety during work by an operator (or "finger test requirement") can be satisfied by relatively simple and economic means, such as are for example described in European patent application EP 1049227 by the same applicant, the requirement that the equipment should be leaktight has hitherto been satisfied by particularly complex and costly arrangements which make both installation and subsequent adjustments to the system, such as the provision of new offtakes, the removal of existing offtakes and extension of the system, particularly difficult and laborious.

This invention avoids these disadvantages and provides an extremely simple structure which can be manufactured economically in large volumes and satisfies the requirements already indicated. It is also particularly robust, even when constructed with the minimum use of material, and is easily transportable and capable of being installed without any risk of damage.
Once installed it is then possible to make "permanent" electrical connections between prefabricated duct members with end connectors without the need for tools and laborious installation work.
This is particularly important because as a result of elongation and shrinkage of the prefabricated duct member caused by thermal changes there is some tendency for the end connectors to become unthreaded from their insertions.

According to the invention these results are achieved through a prefabricated duct member structure and corresponding method of manufacture as defined in the appended claims.

Before the present invention some attempt has been made to overcome the above mentioned disadvantages.

US 3,771,103 discloses a prefabricated bus duct consisting in a support of insulating material forming a plurality of rectilinear slots open onto one side of the support, each slot housing a conductor bar pres fitted into the slot.
Once the conductor bars have been press fitted into the slots, a pierceable insulating layer is glued or welded, at its longitudinal edges, to the insulating support, onto the surface thereof where the slots open.
Although this arrangement provides hermetical sealing of the slots set, the slots are not individually sealed and the layer is prone to possible tearing when pins of a connection plug are forced through the layer to establish contact with the conductive bars.
Further a surface resistive path is left between adjacent conductive bars all along their length.
US 6,039,584 discloses a prefabricated bus duct where conductive bars are inserted in rectilinear slots, formed in an insulating support, through one end of the slots and blocked therein by retainers inserted into each end of the slots and glued therein.
The insulating support is further inserted into an extruded metal enclosure and fastened therein by rivets.
Although the enclosure provides a protection to the conductive bars and to their support, the arrangement is not leaktight.
EP 0652609 discloses a prefabricated bus duct where conductive bars, having a T-shaped transverse cross section are coextruded with an insulating support.
The insulating support is snap fitted into an enclosure having a cover snap fitted thereto. An additional longitudinal protection panel, snap fitted either onto the bars or the insulating support, may be provided for protection against accidental contact with the conductive bars.The arrangement is not leaktight.
Further a surface resistive path is left between adjacent conductive bars, all along their lenght.

The features and advantages of this invention will be more particularly apparent from the following description of a preferred embodiment and some of its variants with reference to the appended drawings in which:
Figure 1 is an exploded perspective view of a preferred embodiment of the leaktight prefabricated duct member for the distribution of electrical power with currents of the order of tens of amperes,

- Figure 2 is an enlarged transverse cross-section of a component of the conductor member in Figure 1,
- Figure 3 shows, in enlarged view, a stage in the assembly of the prefabricated duct member of Figure 1,
- Figure 4 is an enlarged transverse cross-section of the prefabricated duct member after assembly,
- Figure 5 is a cross-section along the view A-A in Figure 4 of an end portion of the prefabricated duct member in Figure 1,
- Figure 6 is another cross-section along the view B-B in Figure 4 of the end portion in the preceding figure.
- Figure 7 is an enlarged transverse cross-section view of the prefabricated duct member illustrating a first variant embodiment of the same,
- Figure 8 is an enlarged transverse cross-section view of the prefabricated duct member illustrating a second embodiment of the same.

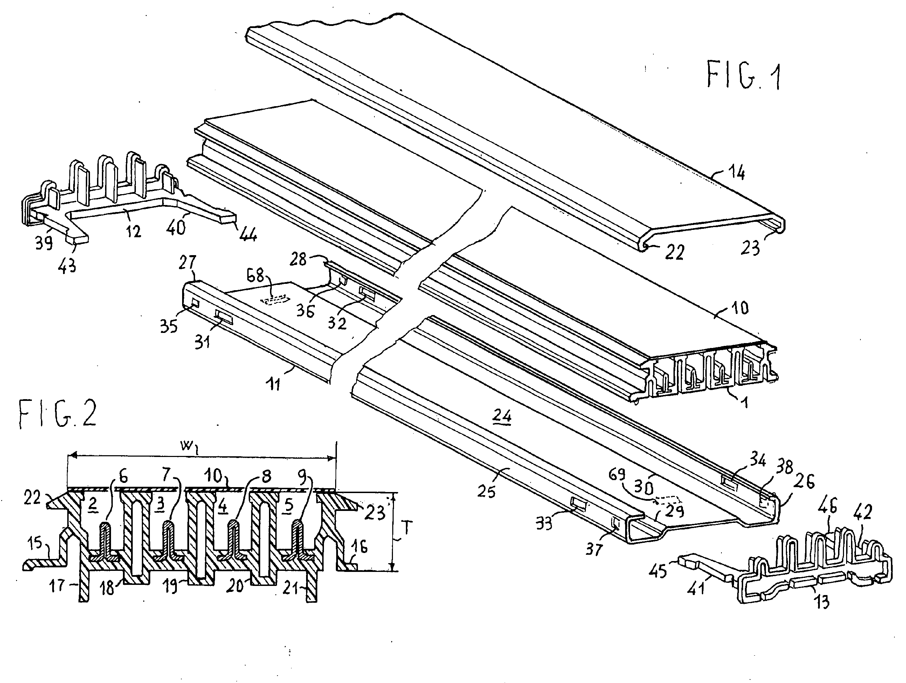

With reference to Figures 1 and 2, a prefabricated member according to this invention comprises an extruded supporting bar 1 of insulating material, a plurality of conductor bars 6, 7, 8, 9, each housed in a corresponding slot 2, 3, 4, 5 formed in supporting bar 1, a sheet of pierceable insulating material 10 heat bonded to the supporting bar for hermetic enclosure of the slots, a metal enclosure (or better half-enclosure) 11 providing rigidity and protection for the prefabricated member and, preferably but not necessarily, two end plugs 12, 13 of plastics material, with the multiple functions of protection against accidental contacts, blocking of the end connectors and improving insulation at the ends (as a result of increasing the surface distances between the conducting bars and between them and metal enclosure 11). Preferably but not necessarily it also comprises a cap 14 of plastics material protecting the sheet of pierceable insulating material 10.

As illustrated in Figure 2, supporting bar 1, preferably of rigid PVC, NORYL (registered trade mark) or other similar insulating materials is obtained by extrusion with a relatively complex cross-section in which in addition to slots 2-5 which are open on one flat face there are lightening cavities which in addition to saving material are also used to render the thickness of the extruded material relatively uniform so as to avoid the occurrence of internal stresses of the material and consequent undesirable strains.

Also, and this is particularly important, they increase the surface insulation distance between the various conductors. It should in fact be remembered that insulating materials have a predetermined surface resistivity, which is different from their dielectric strength, which has to be borne in mind.

Of approximately rectangular shape, with a width W of some 40-50 mm and a thickness T of some 10-20 mm, the supporting bar has a first pair of flanges 15, 16, extending at the sides, and a series of supporting ribs 17, 18, 19, 20, 21 extending on the side opposite to the one where the slots open.

Preferably supporting bar 1 also has a second pair of flanges 22, 23 which extend from its sides in the vicinity of the surface at which the slots open and make it possible for protective cap 14, which is shaped for the purpose with continuous lateral engaging teeth 22, 23, as is clearly visible in Figure 1, to be snap fitted on top of them. These flanges also make it possible to snap on connectors at any point along the entire length of the prefabricated conductor member.

A continuous conducting bar 6, 7, 8, 9, preferably of copper or aluminium, with a T-shaped cross-section, is housed in each of the slots.

Advantageously the conducting bars are obtained by bending a conducting plate in a rolling mill and are inserted into bar 1 through a coextrusion process in such a way that the flanges of the conducting bars are embedded in the insulating material of bar 1.

In this way the conducting bars are made of one piece with supporting bar 1. Advantageously the same mill can cut a single strip into several plates, as many as there are bars which have to be formed, using roller cutters.

Again in the course of the coextrusion process or immediately afterwards when the insulating material is still hot, a continuous strip 10 of insulating material, for example plastified PVC, and therefore relatively soft and yielding, is applied to the side of the supporting bar 1 at which the slots open, becoming heat bonded to the whole side, hermetically and individually sealing each of the slots 2-5. Insulating sheet 10 may have a thickness of the order of 0.4-0.6 mm and is spaced apart from the conducting bars.

In addition to ensuring that the slots are leaktight (except at their ends), insulating sheet 10 intrinsically provides "finger test" electrical protection with a dielectric strength of the order of a few KV and at the same time can easily be perforated by metal points or blades designed to come into contact with the conducting bars.

Any edges from the perforation of sheet 10, which as mentioned is well spaced apart from the conducting bars (a number of millimetres), find ample housing in slots 2-5 and do not hamper or prejudice the quality of the electrical contact, which may extend over a contact surface area of the order of a number of mm² in such a way as to transfer currents of the order of tens of amperes without overheating and with very low contact resistance.

This is a fundamental difference in comparison with known electrical connection systems obtained by perforating the insulating material, currently used with "flat cables" and other sheathed or coated conductors in which very small (signal) currents flow, and also, in general, relatively low voltages of the order of a few tens of volts or less are present.

Clearly, in the course of the process of extruding (or better coextruding) supporting bar 1 and associated conductor bars 6-9, supporting ribs 17-21 are formed from the same material as bar 1 on the surface 8 of the supporting bar opposite that at which slots 2-5 open.

The product so obtained by the coextrusion process is cut to desired and standard lengths (for example 1, 2, 3 metres) using automatic sawing machines.

In order to make the products so obtained more robust and make storage, transport and subsequent installation safer, these are coupled with enclosure 11 in the course of the production stage.

Enclosure 11 comprises a metal sheet, preferably of zinc-plated iron or in any event passivated iron (using ALUZINC) and even also stainless steel, in thicknesses of the order of 0.5-1 mm, previously cut to the required dimensions and bent (using a bending template press) in such a way as to adopt a substantially C-shaped configuration with a base 24 suitably stiffened against bending in the longitudinal direction by ribs 29, 30 and with two flanking members 25, 26 which initially are only partly bent and extend inwardly in two opposite flanges 27, 28.

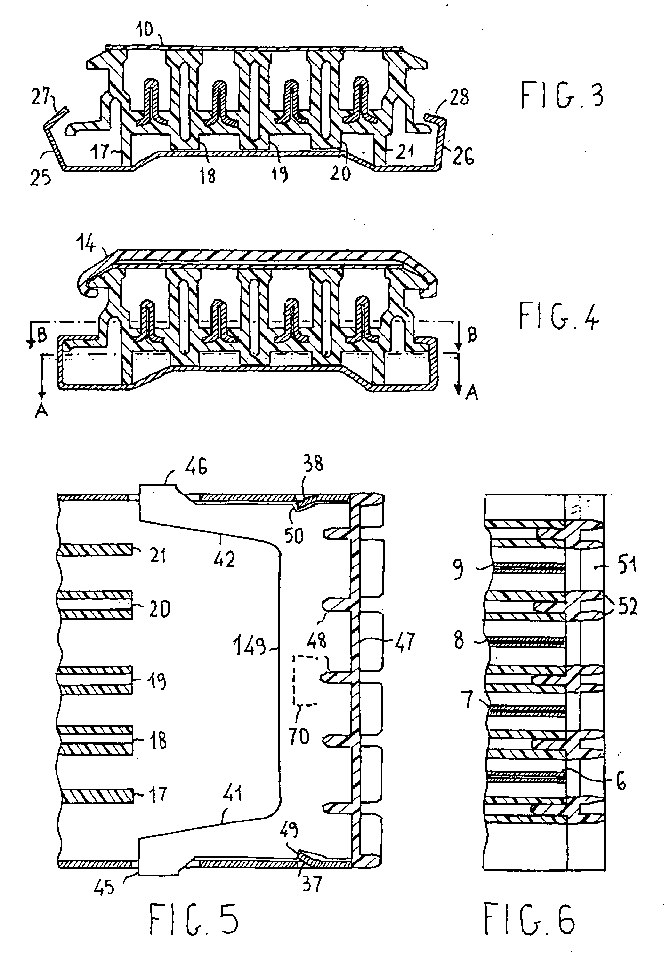

The semi-finished product comprising supporting bar 1 and insulating sheet 10 may easily be inserted into enclosure 11 and positioned therein with ribs 17-21 bearing against bottom 24, in such a way that flange 16 is inserted beneath flange 28 of the enclosure. This stage in manufacture is illustrated in the cross-section of Figure 3.

A subsequent process of rolling side members 25, 26 and flanges 27, 28 (and in this respect ribs 29, 30 also serve to provide a plane taking up the stresses due to rolling) completes the bending, brings flanges 27, 28 into contact with flanges 15, 16 and as a result of the relative elasticity of the materials (in particular the plastics of support 1) imparts controlled flexion on the latter which ensures a predetermined contact pressure between the flanges of the enclosure and those of support 1, and specifically a hermetic seal for the connection.

Once assembly is complete the transverse cross-section of the structure of the prefabricated conductor member has the shape illustrated in Figure 4, which also illustrates protective cap 14 snapped onto flanges 22, 23 of support bar 1.

Figures 1-4 relate to a prefabricated member for the distribution of a three-phase voltage/current system, therefore with three conducting bars for the RST phases plus a fourth conductor for the neutral N. The function of the earth conductor is instead conveniently performed by enclosure 11.

It is however obvious that the prefabricated member can be provided for the distribution of only single phase voltage/current, with only two conducting bars plus, if appropriate, an earth bar. More generally any number of conducting bars may be provided in accordance with the requirements which have to be satisfied.

A further aspect now remains to be considered. The desirability of providing systems for blocking the electrical connectors inserted at the ends of the prefabricated conductor member (which among other things must ensure that the prefabricated conductor member is leaktight at its ends and are the subject of another patent application separate from this application) has already been mentioned.

In this respect, as may be clearly seen in Figure 1, two pairs of opposite openings 31, 32 and 33, 34 for the passage of blocking teeth are provided in side members 25, 26 of metal enclosure 11 in the vicinity of its extremities and two pairs of tongues 35, 36 and 37, 38 which are bent towards the interior of side members 25, 26 are also formed.

In turn tongues 35-38 serve to irreversibly engage the blocking members on enclosure 11.

These comprise two end plugs 12, 13, illustrated in Figure 1, which are force fitted onto the ends of enclosure 1.

The two plugs, made of insulating plastics material, are each provided with a pair of resilient arms 39, 40 and 41, 42 which project within the enclosure and terminate in securing teeth 43, 44, 45, 46.

For greater clarity Figures 5 and 6 illustrate one of these plugs inserted into enclosure 11 in enlarged cross-section according to views A-A and B-B in Figure 4 respectively.

With reference to these figures, plug 13 has a front wall 47 which abuts against the extremity of enclosure 11, ribs, such as 48, which are inserted in the cavity formed in the teeth of supporting bar 1 and a flange 149 which is inserted between the bottom 24 (Figure 1) of enclosure 11 and the bottom surface of supporting bar 11 from which supporting ribs 17-21 are removed (by milling, in the course of the manufacturing process) at its extremities.

Flange 149 is extended into two arms 41, 42 ending in securing teeth 45, 46 which project outwards passing through openings 33, 34 in the sides of the enclosure.

Plug 13 is inserted in enclosure 11 through the relative elasticity of the same (but this can also take place during the manufacturing stage illustrated in Figure 3) and is rendered irreversible by tongues 37, 38 which grip on a stop 49, 50 formed in arms 41, 42 of plug 13 and which can also be bent inwards subsequent to insertion of the plugs.

In turn, if a sealed extremity connector (or only a sealing cap) is fitted onto the extremity of the prefabricated duct member in the form of a sleeve and provided with stops acting together with teeth 45, 46, the permanency of the connection is ensured.

End plugs 12, 13 do not only have the function of ensuring the permanence of any end connections, but also that of ensuring protection which satisfies the "finger test" requirement for the extremities of the conducting bars.

They also improve the extremity insulation between the various conductors (between them and between the metal enclosure, increasing the surface distance between them, and therefore the surface insulation resistance, through ribs 48 and flange 149.

In addition to the perspective view in Figure 1, these aspects may also be seen in the cross-section in Figure 6.

Plug 13, which abuts against the extremity of the prefabricated duct member, covers and masks all that part of the extremities of conducting bars 6-9 which is surrounded by the plastics material of supporting bar 1.

In addition to this plug 13 is provided on its external surface with a suitably shaped projecting edge 51, with extensions which lie adjacent to the extremities of the teeth of supporting bar 1 laterally defining slots 2-5, over their full height.

This edge, although not overlapping slots 2-5 and the portion of conducting bars 6-9 exposed in the said slots, ensures that the extremities of the conducting bars are substantially recessed (indicatively by 5-6 mm or more) with respect to the tip 52 of the edge. In relation to the dimensions of slots 2-5, of the order of 6-7 x 8-9 mm, this satisfies the "finger test requirement".

However, differently from what is illustrated in the figures, there is nothing to prevent end plugs 13, 14 having a profile which completely overlaps that of the prefabricated member, with an edge which completely encloses each of the slots and supports a grid of insulating bars which lie adjacent to the extremities of the conducting bars, masking them, although permitting end access to the slots, for the insertion of extremity contact pins or blades.

Clearly, in addition to permitting extremity electrical connections, the prefabricated duct member described also makes it possible, as already mentioned, to make electrical connections along its entire longitudinal extent at any desired position.

For this purpose it is sufficient to remove a portion of protective cap 14 (which is easily separable from the prefabricated member because it is an easily removable snap connection, being of plastics material) and fit a connector provided with contact blades which by perforating insulating sheet 10 make electrical connections (all or only some of those possible) to the prefabricated member as a replacement for the protective cap.

The innovative aspects of a leaktight connector for use with the prefabricated duct member described here is the subject of a specific patent application and does not fall within the scope of this invention.

It is sufficient here to point out the following aspects:
I) Where the leaktight nature of the prefabricated member has to be restored at a point where a connector was previously located it is sufficient to fit an insulating plug to sheet 10, snapped onto flanges 22, 23 of the prefabricated conductor member.
   By exerting suitable pressure on sheet 10 (or preferably on a portion of the same surrounding the perforated area like an edge) the plug ensures that it is leaktight. An adhesive sheet may also be provided between the plug and sheet 10, or an adhesive sheet as a replacement for the plug.
II) Although for an end connector the asymmetrical structure of the prefabricated conductor member relative to a median plane parallel to sheet 10 ensures that coupling with the connector can only take place in one way, in the case of an in-line connector, that is one located in an intermediate position on the prefabricated member, it is, as is well known, generally (but not always) necessary to provide arrangements which permit a specific single manner of connection.
   With this object it will be clearly noted in the various figures from 1 to 4 that flange 15 of supporting bar 1 has a greater lateral extension than flange 16.
   This gives rise to an asymmetry or "polarisation" with regard to the position of the conducting bars, which may be used by a connector which is similarly polarised for connection to the conducting bars in a univocal way. It is clear that this requirement would not arise if the conducting bars, which were two in number (plus possibly a third earth conducting bar fitted in an intermediate position between the other two), were intended to transfer a single phase alternating/current.
III) The prefabricated duct member already described is leaktight at its periphery but not at its ends. In addition the openings 31-34 and those inevitably produced by the shearing of tongues 35-38 make pervious the intermediate space between supporting bar 1 and bottom 24 of the enclosure.

In order to ensure that a distribution system which uses the prefabricated duct member is leaktight it is therefore necessary that the end electrical connectors or any caps closing off the ends enclose the end of the prefabricated duct member, including openings 31-34 and those corresponding to tongues 35-38, in a leaktight manner, in the manner of a sleeve.

The above description relates to a preferred embodiment but it is clear that many variants may be applied thereto.

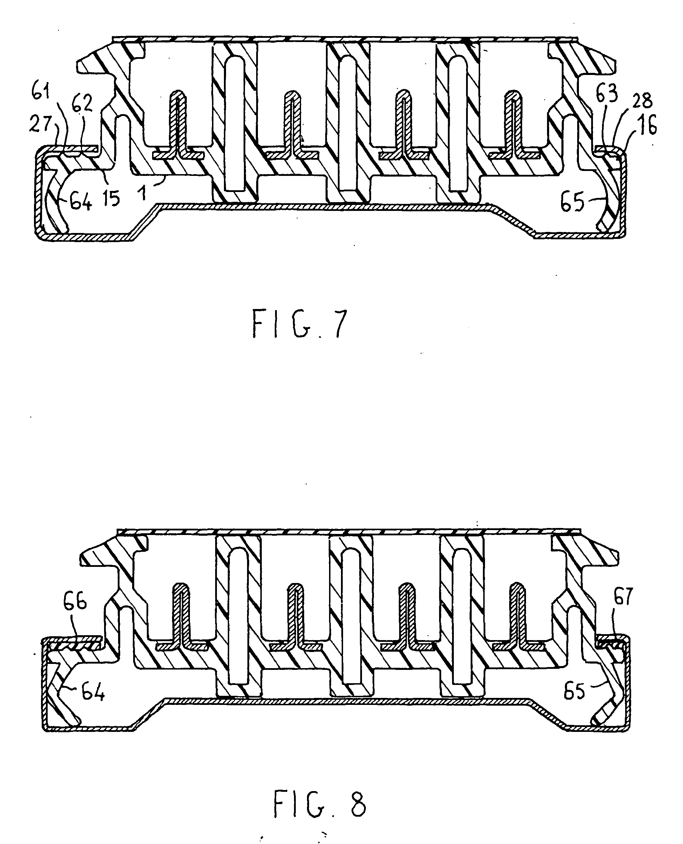

In particular the leaktight connection between flanges 27, 28 of the enclosure and corresponding flanges 15, 16 of supporting bar 1 may be further improved by the measures illustrated in the enlarged transverse cross-sectional views in Figures 7 and 8.

In Figure 7 flanges 15, 16 of supporting bar 1 are provided with thin projecting straight ribs 61, 62, 63 (obtained in the extrusion process) on the upper surface, which are designed to come into contact with flanges 27, 28 respectively of enclosure 1, and which are compressed by flanges 27, 28. The localised pressure on the ribs ensures that the connection is perfectly leaktight. In addition to this, unlike the embodiment illustrated in Figures 3 and 4 in which flanges 15, 16 are stressed in flexion by the superimposed flanges 27, 28 of the enclosure and are therefore subjected to internal tension and compression forces while the thrust exerted by flanges 27, 28 on flanges 15, 16 is opposed by supporting ribs 17, 21, stressed in compression, in Figures 7 and 8 ribs 17, 21 are replaced by supporting ribs 64, 65 which extend directly from flanges 15, 16 instead of from the body of supporting bar 1.

These ribs are conveniently of a curved shape, as illustrated in Figure 7, or elbow shaped, as illustrated in Figure 8, and it is these which support the load exerted by flanges 27, 28.

It is obvious that in this case flanges 15, 16 are subjected to simple compression and ribs 64, 65 are essentially subjected to a point loading or pressure and flexion, with only internal compression stresses, which are more easily supported without the risk of the insulating material used breaking.

In addition to this the contact pressure developed in this way corresponding substantially to the critical (point) loading of ribs 64, 65 is largely independent of the manufacturing dimensional tolerances of the prefabricated member, which instead in the previous situation in Figure 4 might have influenced the contact pressure between ribs 15, 16 and 27, 28, prejudicing a leaktight connection.

As a further improvement, it may be provided, as illustrated in Figure 8, that a thin sheet of plastified and relatively soft and resilient insulating material 66, 67 is connected to flanges 15, 16 and placed between flanges 27, 28 of the enclosure and flanges 15, 16 in the form of a seal, as a replacement for ribs 61, 62, 63.

The plasticized insulating material may be the same as that used to manufacture sheet 10 closing off the slots, and like this it may be connected to flanges 15, 16 by heat bonding in the course of the extrusion process without complication of the production process.

Although the system for reversibly immobilising end plugs 12, 13 on enclosure 11, illustrated in Figures 1 and 5, is through a pair of tongues 35, 36 and 37, 38 formed in the sides 25, 26 of the enclosure, this is purely by way of example. It is obvious that pairs of tongues 35, 36 and 37, 38 may each be replaced by a single tongue 68, 69 respectively formed in the bottom 24 of the enclosure and acting together with a stop 70 formed on flange 149 (Figure 5) of the two covers.

For completeness of representation in Figure 1 tongues 68, 69 replacing tongues 35-38 are illustrated by dashed lines, and therefore stop 70 is also illustrated by dashed lines in Figure 5.

## Claims

1. Watertight prefabricated duct member for the distribution of electrical power, comprising an extruded support (1) of insulating material forming a plurality of rectilinear slots (2, 3, 4, 5) parallel to each other and open on an upper surface of said support (1), a plurality of conducting bars (6, 7, 8, 9), each housed in one of said slots, extending over the entire length of said spaces and fixed to said support (1), said support (1) extending on its two sides as a first pair of lateral flanges (15, 16), **characterised in that** it further comprises:
- a sheet of pierceable insulating material (10) heat bonded to the whole side of said support (1) onto which said slots open and spaced apart from said conducting bars such as to individually seal each of said slots hermetically over their entire length leaving a gap between said sheet (10) and said conducting bars (6, 7, 8, 9) and
- a metal enclosure sheath (11) extending over the entire length of said support (1) having a base (24) and continuous sides (25, 26) bent into a pair of flanges (27, 28) which leaktightly couple with said first pair of flanges (15, 16) of said support (1), enclosing them in said enclosure (11) and leaving the upper surface of said support and said sheet of pierceable insulating material (10) accessible.

2. Prefabricated duct member according to claim 1, where said conducting bars (6, 7, 8, 9) have a T-shaped transverse cross-section and the flanges of the said T-shaped cross-section are embedded in said support (1) of insulating material.

3. Prefabricated duct member according to claim 2, where said conducting bars (6, 7, 8, 9) having a T-shaped cross-section consist in a plate of bent metal material.

4. Prefabricated duct member according to claim 1, 2 or 3, in which said supporting bar (1) extends at its sides into a second pair of flanges (22, 23) for the snap connection of a cap (14) protecting said insulating sheet (10) onto said second pair of flanges.

5. Prefabricated duct member according to Claim 4, comprising said protective cap (14), said cap being of insulating plastics material.

6. Prefabricated duct member according to any one of the preceding claims in which the lateral flanges (15, 16) of said first pair each extend beneath into a supporting rib (64, 65) on the base (24) of said enclosure, said supporting rib having a cross-section which is curved or bent into an elbow.

7. Prefabricated duct member according to any one of the preceding claims in which said first pair of lateral flanges (15, 16) has at least a thin projecting rib (61, 62, 63) on the surface which is intended to engage with the pair of flanges (27, 28) of said enclosure (11).

8. Prefabricated duct member according to any one of the preceding claims in which said first pair of lateral flanges (15, 16) is coated with a sheet of plasticized insulating material on the surface intended to couple with the pair of flanges (27, 28) of said enclosure (11).

9. Prefabricated duct member according to any one of the preceding claims comprising a pair of end plugs (12, 13) of plastics material irreversibly fixed to said enclosure (11) to prevent direct contact between an operator's finger and the extremities of said conducting bars (6, 7, 8, 9) and to improve the surface insulation at the extremity.

10. Prefabricated duct member according to claim 9 in which the sides (25, 26) of said enclosure have a pair of opposing openings (31, 32, 33, 34) in the vicinity of the extremities of said prefabricated duct member and said end plugs each extend within said enclosure into a pair of opposing resilient arms (39, 40, 41, 42) ending in stop teeth (43, 44, 41, 42) which in passing through said openings extend externally with respect to said sides.

11. Prefabricated duct member according to claim 9 or 10, in which said end plugs are each irreversibly fixed to said enclosure (11) by means of at least one tongue (35, 36, 37, 38, 68, 69) formed in said enclosure, bent inwardly with respect to said enclosure and acting together with a stop (49, 50, 70) formed in each of said plugs.

## Patentansprüche

1. Wasserdichtes, vorgefertigtes Leitungskanalelement für die Verteilung elektrischen Stroms, umfassend eine stranggepresste Stütze (1) aus Isoliermaterial, welche eine Mehrzahl geradliniger Schlitze (2, 3, 4, 5) umfasst, die zueinander parallel sind und sich zu einer oberen Fläche der Stütze (1) öffnen, eine Mehrzahl von Leiterschienen (6, 7, 8, 9), welche jeweils in einem der Schlitze aufgenommen sind, sich über die gesamt Länge der Räume erstrecken und an der Stütze (1) befestigt sind, wobei sich die Stütze (1) auf ihren beiden Seiten als ein erstes Paar lateraler Flansche (15, 16) erstreckt, **dadurch gekennzeichnet, dass** sie ferner umfasst:
- ein Blatt durchbohrbaren Isoliermaterials (10), welches durch Wärmeverbindung mit der ganzen Seite der Stütze (1) verbunden ist, zu der sich die Schlitze öffnen, und welches zu den Leiterschienen beabstandet ist, so dass jeder der Schlitze über seine gesamte Länge einzeln hermetisch abgedichtet ist, wobei ein Spalt zwischen dem Blatt (10) und den Leiterschienen (6, 7, 8, 9) verbleibt, und
- eine Metallgehäusehülle (11), die sich über die gesamte Länge der Stütze (1) erstreckt und eine Basis (24) und fortlaufende Seiten (25, 26) umfasst, die zu einem Paar von Flanschen (27, 28) gebogen sind, welche wasserdicht an das erste Paar Flansche (15, 16) der Stütze (1) gekoppelt sind, die sie in dem Gehäuse (11) einschließen und die obere Fläche der Stütze und das Blatt durchbohrbaren Isoliermaterials (10) zugänglich lassen.

2. Vorgefertigtes Leitungskanalelement nach Anspruch 1, wobei die Leitungsschienen (6, 7, 8, 9) einen T-förmigen transversalen Querschnitt aufweisen und wobei die Flansche des T-förmigen Querschnitts in die Stütze (1) aus Isoliermaterial eingebettet sind.

3. Vorgefertigtes Leitungskanalelement nach Anspruch 2, wobei die Leiterschienen (6, 7, 8, 9) einen T-förmigen Querschnitt aufweisen und aus einer Platte gebogenen Metallmaterials besteht.

4. Vorgefertigtes Leitungskanalelement nach Anspruch 1, 2 oder 3, wobei sich die Stützschiene (1) an ihren Seiten für die Einrastverbindung einer Kappe, die das lsolierblatt (10) auf dem zweiten Paar Flansche schützt, in ein zweites Paar Flansche (22, 23) erstreckt.

5. Vorgefertigtes Leitungskanalelement nach Anspruch 4, umfassend die Schutzkappe (14), wobei die Kappe aus isolierendem Kunststoffmaterial ist.

6. Vorgefertigtes Leitungskanalelement nach einem der vorangehenden Ansprüche, wobei sich die lateralen Flansche (15, 16) des ersten Paars jeweils nach unten in eine Stützrippe (64, 65) auf der Basis (24) der Umhüllung erstrecken, wobei die Stützrippe einen Querschnitt aufweist, welcher zu einem Kniestück gekrümmt oder gebogen ist.

7. Vorgefertigtes Leitungskanalelement nach einem der vorangehenden Ansprüche, wobei das erste Paar lateraler Flansche (15, 16) wenigstens eine dünne hervorstehende Rippe (61, 62, 63) auf der Oberfläche umfasst, welche dafür gedacht ist, mit dem Paar Flansche (27, 28) des Gehäuses (11) einzugreifen.

8. Vorgefertigtes Leitungskanalelement nach einem der vorangehenden Ansprüche, wobei das erste Paar lateraler Flansche (15, 16) an der Fläche, die an das Paar Flansche (27, 28) des Gehäuses (11) gekoppelt werden soll, mit einem Blatt plastifizierten Isoliermaterials beschichtet ist.

9. Vorgefertigtes Leitungskanalelement nach einem der vorangehenden Ansprüche, umfassend ein Paar Endstecker (12, 13) aus Kunststoffmaterial, die irreversibel an dem Gehäuse (11) befestigt sind, um einen direkten Kontakt zwischen dem Finger eines Bedieners und den Enden der Leiterschienen (6, 7, 8, 9) zu verhindern und die Flächenisolierung am Ende zu verbessern.

10. Vorgefertigtes Leitungskanalelement nach Anspruch 9, wobei die Seiten (25, 26) des Gehäuses ein Paar gegenüber liegender Öffnungen (31, 32, 33, 34) in der Nachbarschaft der Enden des vorgefertigten Leitungskanalelements aufweisen und wobei sich die Endstecker jeweils in dem Gehäuse in ein Paar gegenüber liegender elastischer Arme (39, 40, 41, 42) erstrecken, die in Arretierungszähnen (43, 44, 41, 42) enden, welche sich durch das Führen durch die Öffnungen bezüglich der Seiten nach außen erstrecken.

11. Vorgefertigtes Leitungskanalelement nach Anspruch 9 oder 10, wobei die Endstecker jeweils mittels wenigstens einer in dem Gehäuse geformten, bezüglich des Gehäuses nach innen gebogenen und mit einer in jedem der Stecker gebildeten Arretierung (49, 50, 70) zusammen wirkenden Zunge (35, 36, 37, 38, 68, 69) irreversibel an dem Gehäuse (11) befestigt sind.

## Revendications

1. Elément préfabriqué et étanche de goulotte pour la distribution de puissance électrique, comprenant un support extrudé (1) en matériau d'isolation formant une pluralité de fentes rectilignes (2, 3, 4, 5) parallèles les unes aux autres et ouvertes sur une surface supérieure dudit support (1), une pluralité de barres conductrices (6, 7, 8, 9), chacune contenue dans une desdites fentes, s'étendant sur toute la longueur desdits espaces et fixée audit support (1), ledit support (1) s'étendant sur ses deux côtés tel une première paire de rebords latéraux (15, 16), **caractérisé en ce qu'**il comprend en outre :
- une feuille de matériau d'isolation pouvant être percé (10) thermocollée sur la totalité du côté dudit support (1) sur lequel lesdites fentes s'ouvrent et espacée desdites barres conductrices de manière à fermer de façon individuelle chacune desdites fentes hermétiquement sur toute leur longueur en laissant un écart entre ladite feuille (10) et lesdites barres conductrices (6, 7, 8, 9) et
- une gaine d'enveloppe en métal (11) s'étendant sur toute la longueur dudit support (1) ayant une base (24) et des côtés continus (25, 26) pliés en une paire de rebords (27, 28) qui est couplée de façon étanche aux fuites à ladite première paire de rebords (15, 16) dudit support (1), les enveloppant dans ladite enveloppe (11) et laissant accessibles la surface supérieure dudit support et ladite feuille de matériau d'isolation pouvant être percé (10).

2. Elément préfabriqué de goulotte selon la revendication 1, dans lequel lesdites barres conductrices (6, 7, 8, 9) ont une coupe transversale en forme de T et les rebords de ladite coupe transversale en forme de T sont incorporés dans ledit support (1) en matériau d'isolation.

3. Elément préfabriqué de goulotte selon la revendication 2, dans lequel lesdites barres conductrices (6, 7, 8, 9) ayant une coupe transversale en forme de T sont constituées d'une plaque de matériau de métal plié.

4. Elément préfabriqué de goulotte selon la revendication 1, 2 ou 3, dans lequel ladite barre de support (1) s'étend sur ses côtés dans une deuxième paire de rebords (22, 23) pour la liaison par encliquetage d'un couvercle (14) protégeant ladite feuille d'isolation (10) sur ladite deuxième paire de brides.

5. Elément préfabriqué de goulotte selon la revendication 4, comprenant ledit couvercle protecteur (14), ledit couvercle étant fait d'un matériau d'isolation plastique.

6. Elément préfabriqué de goulotte selon l'une quelconque des revendications précédentes, dans lequel les brides latérales (15, 16) de ladite première paire s'étendent chacune en dessous dans une nervure de support (64, 65) sur la base (24) de ladite enveloppe, ladite nervure de support ayant une coupe transversale qui est courbée ou pliée en un coude.

7. Elément préfabriqué de goulotte selon l'une quelconque des revendications précédentes, dans lequel ladite première paire de rebords latéraux (15, 16) a au moins une nervure fine faisant saillie (61, 62, 63) sur la surface devant entrer en contact avec la paire de rebords (27, 28) de ladite enveloppe (11).

8. Elément préfabriqué de goulotte selon l'une quelconque des revendications précédentes, dans lequel ladite première paire de rebords latéraux (15, 16) est revêtue d'une feuille de matériau d'isolation plastifié sur la surface devant être couplée à la paire de brides (27, 28) de ladite enveloppe (11).

9. Elément préfabriqué de goulotte selon l'une quelconque des revendications précédentes, comprenant une paire de bouchons d'extrémité (12, 13) en matériau plastique fixée de façon irréversible sur ladite enveloppe (11) pour empêcher un contact direct entre le doigt d'un utilisateur et les extrémités desdites barres conductrices (6, 7, 8, 9) et pour améliorer l'isolation de surface à l'extrémité.

10. Elément préfabriqué de goulotte selon la revendication 9, dans lequel les côtés (25, 26) de ladite enveloppe ont une paire d'ouvertures opposées (31, 32, 33, 34) dans le voisinage des extrémités dudit élément préfabriqué de goulotte et lesdits bouchons d'extrémité s'étendent chacun à l'intérieur de ladite enveloppe dans une paire de bras élastiques opposés (39, 40, 41, 42) se terminant en dents d'arrêt (43, 44, 41, 42) qui en passant à travers lesdites ouvertures s'étendent de façon externe par rapport auxdits côtés.

11. Elément préfabriqué de goulotte selon la revendication 9 ou 10, dans lequel lesdits bouchons d'extrémité sont chacun fixés de façon irréversible sur ladite enveloppe (11) au moyen d'au moins une languette (35, 36, 37, 38, 68, 69) formée dans ladite enveloppe, pliée vers l'intérieur par rapport à ladite enveloppe et agissant avec un arrêt (49, 50, 70) formé dans chacun desdits bouchons.
